# FASCICULE DE BREVET EUROPEEN

(11) **EP 0 713 361 B1**
(45) Date de publication et mention de la délivrance du brevet: **17.09.1997**
(21) Numéro de dépôt: 94920518.1
(22) Date de dépôt: 27.06.1994
(51) Int. Cl.: A01K 63/00

(54) **CASCADE DECORATIVE POUR AQUARIUMS**
DEKORATIVE KASKADE FÜR AQUARIUM
DECORATIVE WATERFALL FOR AQUARIUMS

(30) Priorité: 18.01.1994 FR 9400493
(43) Date de publication de la demande: 29.05.1996
(73) Titulaire: Tran, Ngoc-Anh, 94400 Vitry-sur-Seine (FR)
(72) Inventeur: Tran, Ngoc-Anh, 94400 Vitry-sur-Seine (FR)
(86) Numéro de dépôt international: FR9400775
(87) Numéro de publication internationale: WO9519105

(56) Documents cités:
- DE-U- 9 107 589
- US-A- 3 057 094
- US-A- 3 390 665
- US-A- 4 160 427

## Description

La présente invention concerne une structure perfectionnée de cascade décorative à circulation continue de sable en milieu aquatique tel qu'aquarium.

On connait dans l'art antérieur,notamment par les brevets U.S. Nos 3 057 094 et 4 160 427 des structures de ce genre.

Ces structures remplissent leur but utilitaire et décoratif mais elles sont entachées de défauts inhérents à leur construction et à leur composition auxquelles la présente invention se propose de remédier par les matériaux naturels qu'elle utilise et qui permettent de constituer dans l'aquarium un milieu écologique analogue au milieu marin si nécessaire à l'équilibre de vie des poissons.

A cet effet, la cascade selon léinvention est obtenue par un simple montage de pierres naturelles et/ou céramique ou par un moulage de pierres naturelles et/ou céramique.

On comprendra mieux les caractéristiques et avantages de l'invention en se référant à la description et aux Figures qui l'accompagnent et dans lesquelles :
La Figure 1 est une vue générale extérieure de face de la cascade selon l'invention ;
la Figure 2 est une vue latérale en coupe de la cascade représentée sur la Figure 1;
la Figure 3 est une vue latérale partielle d'une variante de l'invention ; et
la Figure 4 est une vue latérale d'une autre variante selon l'invention.

La structure S de la cascade est essentiellement constituée par une superposition ou un moulage de pierres naturelles et/ou céramique, dépourvu de toute substance chimique industrielle pouvant polluer l'eau de l'aquarium dans lequel elle est est immergée.

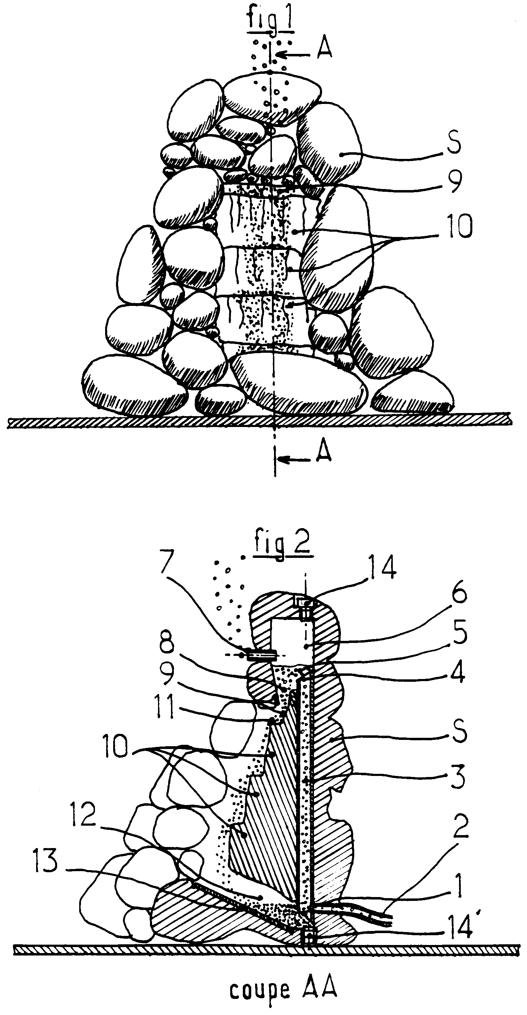

On va décrire les éléments essentiels constitutifs de la cascade et son fonctionnement à l'aide de la Figure 2 qui en représente une vue latérale en coupe complète.

Sur cette Figure,la structure est désignée par la référence globale S. Elle inclut à sa partie inférieure un réservoir de sable 12 à pente émaillée 13 qui aboutit à un orifice d'entrée 1 d'un conduit 3 disposé verticalement pour la montée du sable vers la partie supérieure de la structure. Un conduit transversal 2 relie le conduit 3 à une pompe à air électrique de type quelconque disposée à l'extérieur de l'aquarium,qui assure de la manière connue, la montée du mélange sable+eau+air jusqu'à ce qu'il atteigne en franchis - saut l'extrémité 4 du conduit 3 la partie 5 de la structure. A cet endroit,l'air et le sable se séparent,l'air plus léger se dirigeant vers une chambre 6 d'où il s'échappe hors de la structure par un conduit de sortie 7, tandis que le sable + eau s'écoule par une sortie rétreinte 8 ménagée entre la structure et les saillies 9 horizontales (ou verticales disposées en escalier 10,au nombre de trois dans cet exemple mais qui peut être quelconque,de manière à former une cascade étagée en direction du réservoir 12 pour effectuer un nouveau cycle de fonctionnement identique au précédent,de bas en haut et de haut en bas de la structure et cela continûment tant que la pompe est en fonctionnement.

Le parcours de descente du mélange sable +eau à partir du point 4 du conduit 3 en direction du réservoir 12 est constitué par une partie moulée comprenant un passage rétreint 8 ménagé entre la structure et un plan incliné 9 aboutissant aux saillies 10. Cette partie de la structure interne de la cascade peut être solidaire de la partie extérieure ou constituée par une pièce rapportée permettant d'obtenir le même résultat ,c'est-à-dire la chute en cascade du sable à l'avant de la structure.

Les Figures 2,3,4 représentent des variantes de réalisation du conduit d'expulsion 7 de l'air.

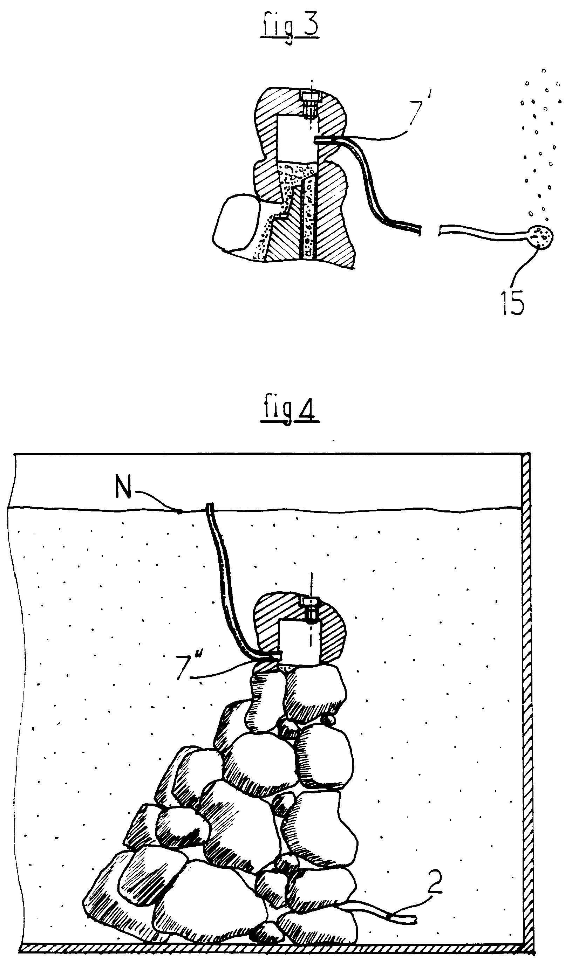

Sur la Figure 2, ce conduit est disposé au milieu de la face avant.Sur la Figure 3, il est disposé sur la face arrière de la structure et prolongé par un conduit 7' qui le relie à un diffuseur d'air 15 disposé à l'intérieur de l'aquarium/.

Sur la Figure 4, il est disposé en 7'' et prolongé au-dessus du niveau N de l'eau dans l'aquarium.
En cours de fonctionnement,il pourrait arriver que le conduit de montée 3 du sable se bouche.Pour y porter remède,l'invention prévoit à la partie supérieure 1 de la structure un bouchon à vis 14 permettant, lorsqu'il est dévissé,de passer une tige dans le conduit 3 pour le dégager en cas d'obstruction. De la même manière,un bouchon à vis 14' permettrait, lorsqu'il est dévissé (hors de l'aquarium), de passer une tige dans le conduit 3 pour le dégager en cas d'obstruction provoquant la panne dans le fonctionnement de la cascade.

## Revendications

1. Structure de cascade décorative (S) à circulation continue de sable pour milieu aquatique tel qu'un aquarium, caractérisée en ce qu'elle est composée par un moulage et/ou montage en pierres naturelles et/ou céramique constituant un milieu écologique identique au milieu marin et de ce fait convenant particulièrement aux poissons circulant dans l'aquarium.

2. Structure selon la revendication 1, caractérisée en ce qu'elle comprend en combinaison ,à la partie inférieure un réservoir de sable (12) aboutissant à l'entrée d'un conduit longitudinal (3) pour l'ascension du sable,un conduit transversal (2) débouchant dans le conduit (3) pour y amener l'air sous pression fourni par une pompe à air telle qu'électrique placée à l'extérieur de l'aquarium (non représentée), de telle manière que le mélange sable, eau et air atteigne par l'extrémité (4) du conduit (3) la partie (5) de la structure où il se divise,l'air plus léger se dégageant vers une chambre (6) d'où il s'échappe vers l'extérieur par un conduit (7) tandis que le sable,de la partie (5) s'engage dans un passage rétreint (8) ménagé entre la structure et des saillies (10) pour redescendre en cascade (11) vers le réservoir (12) afin d'effectuer un nouveau cycle de fonctionnement analogue au précédent de bas en haut et de haut en bas de la structure, et cela continûment tant que la pompe est en fonctionnement.

3. Structure selon la revendication 2, caractérisée en ce que la partie moulée de la structure permettant la descente du sable à partir de l'extrémité (4) du conduit vers le réservoir (12) comprend un passage rétreint (8) ménagé entre la structure et un plan incliné (9) aboutissant à des saillies (10) en nombre quelconque aussi bien horizontales que verticales, pour assurer la chute en cascade du sable vers le réservoir (12).

4. Structure selon la revendication 2,caractérisée en ce que le conduit d'évacuation de l'air (7) est horizontal et débouche sur la surface frontale de la structure d'où il s'échappe dans l'aquarium.

5. Structure selon la revendication 2,caractérisée en ce que le conduit d'évacuation de l'air (7' Figure 3) est disposé à l'arrière de la structure d'où l'air s'échappe en direction d'un diffuseur d'air (15) disposé à l'intérieur de l'aquarium.

6. Structure selon la revendication 2, caractérisée en ce que le conduit d'évacuation d'air (7 '',Figure 4) se prolonge au-dessus du niveau N de l'eau contenue dans l'aquarium afin d'assurer l'évacuation de l'air dans l'atmosphère .

7. Structure selon les revendications 1 et 2, dans laquelle un orifice fermé par un bouchon à vis (14) est prévu à la partie supérieure de la structure,permettant lorsqu'il est dévissé de passer une tige dans le conduit (3) pour le dégager en cas d'obturation.

8. Structure selon les revendications 1 et 2, dans laquelle un orifice fermé par un bouchon à vis (14) est prévu à la partie inférieure de la structure, permettant lorsque le bouchon est dévissé (hors de l'aquarium) de passer une tige dans le conduit (3) pour le dégager en cas d'obstruction provoquant une panne dans le fonctionnement de la cascade.

## Claims

1. Decorative cascade structure (S) featuring continuous sand flow for aquatic environments such as aquariums, formed by moulding and/or mounting of natural or ceramic stones constituting an environmental medium identical to the marine environment, hence particularly adapted to the fish inhabiting the aquarium.

2. Structure as specified at 1), combining a lower section containing a sand reservoir (12) connected to a vertical pipe (3) up which the sand flows, a transverse pipe (2) leading to pipe (3) carrying air under pressure from an air pump (e. g. electrically powered) located outside the aquarium (not shown). The sand/water/air mix is expelled at outlet (4) from pipe (3) into section (5) of the structure where the air, being lighter, disperses into a chamber (5)from which it is released by a pipe (7), while the sand in section (5) is driven into a narrow passage (8) between the structure and the outcrops (10) to cascade (11) back down to the reservoir (12). The sand then follows repeat cycles as described above, being lifted up and falling back as long as the pump continues to operate.

3. Structure as described in 2), in which the moulded part of the structure enabling sand to fall from the outlet (4) of the pipe towards the reservoir (12) contains a narrow passage (8) left between the structure and an inclined plane (9) ending in a number of horizontal and vertical outcrops (number not specified), to ensure that the sand cascades down into the reservoir (12).

4. Structure as described in 2), in which the air evacuation pipe (7) is set horizontally and leads to the front of the structure, through which the air escapes into the aquarium.

5. Structure as described in 2), in which the air evacuation pipe (7', Figure 3) is placed at the rear of structure, from which air escapes to an air diffuser (15) inside the aquarium.

6. Structure as described in 2), in which the air evacuation pipe (7'', Figure 4) extends above the level of water (N) in the aquarium in order to release the air to the atmosphere.

7. Structure as described in 1) an 2), in which an opening sealed by a screw-in plug (14) in the top of the structure is provided which, when the plug is removed, allows a rod to be inserted in the pipe (3) to clear any blockage which may occur.

8. Structure as described in 1) and 2), in which an opening sealed by a screw-in plug (14) in the base of the structure is provided which, when the plug is removed (outside the aquarium), allows a rod to be inserted in the pipe (3) to clear any blockage which may cause the cascade to malfunction.

## Patentansprüche

1. Struktur einer dekorativen kaskade mit ununterbrochener Sandzirkulation für Wasserbecken wie etwa ein Aquarium, die dadurch gekennzeichnet ist, daß sie aus einem Abguß und/oder einer Natursteinkonstruktion und/oder aus Keramik besteht und ein ökologisches Milieu darstellt, das dem Meeresumfeld volkommen gleicht und von daher in besonderer Weise für Aquariumfische geeignet ist.

2. Struktur nach Anspruch 1, dadurch gekennzeichnet, daß sie in ihrem unteren Teil einen Sandehälter (12) darstellt, der an der Mündung einer längsverlaufenden Röhre (3) endet, die dazu dient, den Sand nach oben zu befördern, in Kombination mit einer transversal verlaufenden Röhre (2), die in die längsverlaufende Röhre (3) mündet und ihr Preßluft zuführt, die von einer elektrisch betriebenen Luftpumpe außerhalb des Aquariums (nicht in der Durstellung enthalten) erzeugt wird, dergestalt, daß das Gemisch aus Sand, Waser und Luft vom äußeren Ende (4) der Röhre (3) den Teil (5) der Struktur erreicht, wo es sich teilt, das heißt, die leichtere Luft in Richtung einer Kammer (6) strömt, von wo aus sie durch ein Rohr (2) nach außen entweicht, während der Sand ab dem Teilungspunkt (5) eine verjüngte Passage (8) wählt, die zwischen der Struktur und den Vorsprüngen (10) angelegt ist, um in Form einer Kaskade (11) in das Becken (12) niederzugehen, von wo aus der Funktionskreislauf sich analog dem vorstehend Beschriebenen vom unteren zum oberen und vom oberen zum unteren Ende der Struktur unaufhörlich wiederholt, und dies, solange die Pumpe funktioniert.

3. Struktur nach Anspruch 2, dadurch gekennzeichnet, daß der gegossene Teil derselben Struktur, der das Niedergehen des Sandes wom äußeren Ende (4) der Röhre in das Becken (12) ermöglicht, eine verjüngte Passage (8) enthält, die zwischen der Struktur und einer Schräge (9) angelegt ist und zu horizontal als auch vertikal angelegten Vorsprüngen (10) in beliebiger Zahl führt, um das Kaskadenartige Fallen des Sandes in das Becken (12) zu gewährleisten.

4. Struktur nach Anspruch 2, dadurch gekennzeichnet, daß die Röhre zur Evakuierung der Luft (7) horizontal angelegt ist und auf die Frontfläche der Struktur zuführt, von wo aus sie in das Aquarium entweicht.

5. Struktur nach Anspruch 2, dadurch gekennzeichnet, daß die Röhre zur Evakuierung der luft (7' Abbildung 3) auf der Rückseite der Struktur entlang geführt wird, von wo aus die luft in Richtung eines im Innern des Aquariums befindlichen Lufttrichters (15) entweicht.

6. Struktur nach Anspruch 2, dadurch gekennzeichnet, daß die Röhre zur Evakuierung der Luft (7'' Abbildung 4) sich oberhalb des Wasserniveaus N des Aquariums fortsetzt, damit die Evakuierung der Luft in die Atmosphäre sicher gestellt wird.

7. Struktur nach den Ansprüchen 1 und 2, an deren oberem Teil eine von einem Schraubkorken (14) verschlossene Öffnung vorgesehen ist, die es bei geöffnetem Zustand ermöglicht, einen Stab in die Röhre (3) einzuführen, um sie im falle eines Verschlusses frei zu machen.

8. Struktur nach den Ansprüchen 1 und 2, an deren unterem Teil eine von einem Schraubkorken (14) verschlossene Öffnung vorgesehen ist, die es, wenn der Korken herausgedreht ist (uußerhalb des Aquariums) ermöglicht, einen Stab in die Röhre (3) einzuführen, um sie im Falle eines Verschlusses, der eine Funktionsstörung der Kaskade verursacht, frei zu machen.
